**Europäisches Patentamt**

**European Patent Office**

**Office européen des brevets**

(19)

(11) Publication number: **0 247 082**
**B1**

(12)

# EUROPEAN PATENT SPECIFICATION

(45) Date of publication of the patent specification:
**06.09.89**

(51) Int. Cl.⁴: **C 10 C 3/00**

(21) Application number: **86906474.1**

(22) Date of filing: **03.11.86**

(86) International application number:
**PCT/NO 86/00074**

(87) International publication number:
**WO 87/02694 (07.05.87 Gazette 87/10)**

(54) **METHOD AND APPARATUS FOR FOAMING OF BITUMEN.**

(30) Priority: **04.11.85 NO 854387**

(43) Date of publication of application:
**02.12.87 Bulletin 87/49**

(45) Publication of the grant of the patent:
**06.09.89 Bulletin 89/36**

(84) Designated Contracting States:
**AT BE CH DE FR GB IT LI LU NL SE**

(56) References cited:
**EP-A- 0 122 460**
**AU-C- 433 003**
**DE-A- 2 101 639**
**NO-B- 131 920**

(73) Proprietor: **NODEST VEI A/S, P.O. Box 507,
N-3412 Lierstranda (NO)**

(72) Inventor: **WENTZEL, Jarle, Tors vei 5, N-3000 Drammen
(NO)**
Inventor: **AUNE, Einar, Brinken 21, N-3400 Lier (NO)**

(74) Representative: **Lawrence, Peter Robin Broughton et al,
GILL JENNINGS & EVERY 53-64 Chancery Lane, London
WC2A 1HN (GB)**

ACTORUM AG

## Description

The invention relates to a method and an apparatus for foaming of bitumen to be used e.g. as a coating or film on road materials such as gravel, crushed rock and the like. To this end the bitumen is heated to a temperature at which it exists in a liquid state. The purpose of the foaming is to increase the volume of the bitumen and thus provide a thinner coating and a better utilization of the bitumen material than would be possible by spraying the liquid bitumen without any kind of foaming.

Conventionally foaming of bitumen is carried out by flowing the hot liquid bitumen, which normally has a temperature of 120-160° C, through a pipe, and permitting it to meet a water flow immediately before the pipe outlet, the instantaneous evaporation of the water which then occurs causing foaming of the bitumen as it discharges from the pipe to be mixed with the road material to be coated. Generally a certain amount of amine is added to the bitumen to enhance its adhesion. Amines are unstable at the temperatures to which the bitument is heated, and the amines therefore can not be added to the bitumen until immediately before discharging the bitumen, in order to avoid substantial deterioration of the adhesion effect. Also, for the same reason, only relatively limited amounts of bitumen at a time can be mixed with amines.

AU-C-433003 discloses a method of foaming bitumen (pages 10 and 12) in which liquid water is intimately mixed with the hot bitumen under a superatmospheric pressure adjusted to reduce vaporization of the volatile liquid, and the mixture is then discharged into a lower pressure environment to cause rapid vaporization of the water with consequent foam formation. The reference suggests various methods of mixing the bitumen and steam but warns against formation of a very fine dispersion.

The object of the invention is to provide a more effective method for foaming of bitumen than the conventional method.

This object is achieved according to the invention by mixing water with hot liquid bitumen at a pressure which is higher than the saturation pressure of water vapor (steam) at the temperature of the bitumen, and then allowing the mixture to expand at a pressure which is lower than said saturation pressure and is characterised in that the mixing includes ultrasonic homogenization.

According to a preferred embodiment amines are added to the water before the latter is mixed with the bitumen.

The suitable apparatus comprises a container for hot liquid bitumen and a container for water to be mixed with the liquid bitumen and a mixing device adapted to mix the bitumen and water at a pressure which is higher than the saturation pressure of water vapor at the temperature of the bitumen, metering pumps adapted to rise the pressure of the bitumen and water to the desired value, and a valve through which the bitumen/water mixture will expand under reduced pressure while developing water vapour.

The invention is more fully explained below with reference to the drawing which diagrammatically shows an apparatus for foaming of bitumen according to the invention.

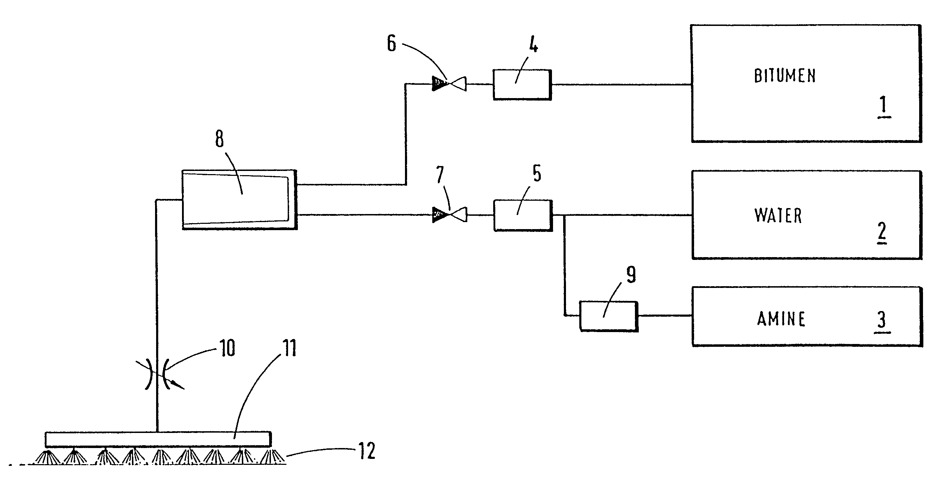

In the drawing 1, 2 and 3 refer to containers or reservoirs for bitumen, water and amine respectively. The bitumen in reservoir 1 is heated to a temperature between 120-160° C and therefore is present in a relatively easy-flowing liquid state. Bitumen and water are pumped via metering pumps 4 and 5 respectively and non-return valves 6 and 7 respectively into a closed chamber of a mixing device 8 provided with stirring means, at a pressure which always is higher than the saturation pressure for water vapor at the above mentioned temperature of the bitumen.

Owing to the high pressure prevailing in the mixing device 8 the water is not boiling while being effectively mixed with the bitumen. The amount of water added to the bitumen will normally be from 1 to 3% by weight as is conventional, depending on the desired degree of foaming. However, the water content may, if desired, of course be higher, favourable results having been reached with a water content as high as 30%.

According to a preferred feature of the invention amine is added to the water before the water pump 5 via a metering pump 9.

The amine will be of a kind that is conventionally used for such purposes, for example diamine, and in usual quantities, for example 0,2-1,5% by weight of the amount of bitumen.

From the mixing device 8 the mixture of bitumen, water and amine is led to an adjustable valve 10, preferably a throttle valve, through which the mixture is allowed to expand at a pressure lower than the above defined saturation pressure, into an expansion chamber in the form of a hollow spraying beam 11 provided with a plurality of outlet nozzles 12. Under the pressure drop on the low pressure side of the valve 10 the water in the hot bitumen mixture will instantly start boiling and thus cause foaming of the bitumen when flowing into the expansion chamber and discharging through the nozzles 12.

As mixing device 8 an ultrasonic homogenization or emulsification unit is used, e.g. of the type "Reson-Heat" as disclosed in US Patent 4 302 112 and delivered in various standard capacities from Reson Systems ApS, Hillerød, Denmark.

The pressure in the mixing device 8 is adjusted by means of the valve 10 depending on the temperature of the bitumen such that the pressure at any time is sufficiently high to prevent boiling of the water on the high pressure side of the valve 10. Normally a pressure of about 981 kPa (10 kp/cm²) will be used, corresponding to water boiling point of about 180° C.

The pressure on the low pressure side of the valve 10 will be 98-294 kPa (1-3 kp/cm²) above atmospheric pressure, sufficient to force the bitumen foam out through the nozzles 12 at a desired rate. The nozzles 12 may be ordinary spraying nozzles when the apparatus according to the invention has a modest capacity, for example up to 10 liter bitumen per minute, while for larger capacities they may advantageously be slit nozzles with adjustable nozzle apertures.

## Claim

A method for the foaming of hot liquid bitumen comprising the following steps:

mixing the hot liquid bitumen with water, exposing the mixture to a pressure which is higher than the saturation pressure of water vapour at the temperature of the hot bitumen, and allowing the mixture to expand at a pressure lower than said saturation pressure, characterized by said mixing step including ultrasonic homogenization.

## Patentanspruch

Verfahren zum Schäumen von heissem, flüssigem Bitumen, welches die nachfolgenden Schritte umfasst:

— Vermischen des heissen flüssigen Bitumens mit Wasser,

— Aussetzen des Gemisches einem Druck, welcher höher als der Sättigungsdruck des Wasserdampfes bei der Temperatur des heissen Bitumens ist, und

— Expandierenlassen des Gemisches bei einem Druck, welcher niedriger als der genannte Sättigungsdruck ist, dadurch gekennzeichnet, dass der genannte Vermischungsschritt Ultraschall-Homogenisierung umfasst.

## Revendication

Procédé pour faire mousser du bitume liquide chaud, comportant les étapes suivantes:

mélanger le bitume liquide chaud avec de l'eau, exposer le mélange à une pression supérieure à la pression de saturation de la vapeur d'eau à la température du bitume chaud, et permettre au mélange de s'expanser sous une pression inférieure à ladite pression de saturation, procédé caractérisé en ce que ladite étape de mélange comporte une homogénéisation par ultrasons.